# EUROPÄISCHE PATENTANMELDUNG

(11) **EP 4 187 655 A1**
(43) Veröffentlichungstag der Anmeldung: **31.05.2023**
(21) Anmeldenummer: 21211060.5
(22) Anmeldetag: 29.11.2021
(51) Int. Cl.: H01M 8/04223, B64D 41/00, H01M 8/0432, H01M 8/0444, H01M 8/2475, H01M 8/249, H01M 8/10

(54) **BRENNSTOFFZELLENSYSTEM MIT AKTIVER GEHÄUSESPÜLUNG**

(71) Anmelder: Airbus Operations GmbH, 21129 Hamburg (DE)
(72) Erfinder: SOUKUP, Nikolaus, 21129 Hamburg (DE); HANCOCK, Kurtus, 21129 Hamburg (DE)
(74) Vertreter: LKGLOBAL Lorenz & Kopf Patentanwalt Attorney at Law PartG mbB

(57) **Zusammenfassung**

Ein Brennstoffzellensystem weist mindestens einen Brennstoffzellenstapel mit einer Kathodenseite und einer Anodenseite, ein den mindestens einen Brennstoffzellenstapel umgebendes Gehäuse, einen Gehäusespüllufteinlass, eine an dem Gehäusespüllufteinlass angeordnete Luftfördereinrichtung, einen Gehäusespülluftauslass, einen Oxidationskatalysator, mindestens einen Temperatursensor, und eine Steuereinheit auf, wobei die Luftfördereinrichtung dazu ausgebildet ist, kontinuierlich einen Luftstrom in den Gehäusespüllufteinlass zu leiten, wobei der Oxidationskatalysator stromabwärts des Gehäusespülluftauslasses angeordnet ist und dazu ausgebildet ist, Wasserstoff und Sauerstoff katalytisch zu verbrennen, wobei der mindestens eine Temperatursensor an dem Oxidationskatalysator angeordnet ist und dazu ausgebildet ist, die Temperatur des Oxidationskatalysators als Information über einen außerhalb eines Brennstoffzellenprozesses anfallenden und abzuführenden Wasserstoffvolumenstrom zu erfassen, und wobei die Steuereinheit mit dem mindestens einen Temperatursensor und der Luftfördereinrichtung gekoppelt ist und dazu ausgebildet ist, eine von dem mindestens einen Temperatursensor erfasste Temperatur aufzunehmen und daraus Veränderungen einer Wasserstoffkonzentration zu bestimmen.

## Beschreibung

### Technisches Gebiet

Die vorliegende Beschreibung betrifft ein Brennstoffzellensystem sowie ein Fahrzeug mit einem solchen Brennstoffzellensystem.

### Technischer Hintergrund

Bei Brennstoffzellen mit Polymer-Elektrolyt-Membran treten oftmals bauartbedingte, geringfügige Leckagen auf, durch die ein geringer Volumenstrom von Wasserstoff austreten kann. Ein Innenraum eines die Brennstoffzelle umgebenden Gehäuses oder eine direkt angrenzende Umgebung könnten folglich eine gewisse Wasserstoffkonzentration aufweisen. Für die Sicherheit eines übergeordneten Systems, beispielsweise eines Fahrzeugs, in das die Brennstoffzelle integriert ist, ist es sinnvoll, eine übermäßige Wasserstoffkonzentration zu vermeiden. Hierzu ist bekannt, die Umgebung einer Brennstoffzelle kontinuierlich zu belüften. Dies reicht aus, einen zu erwartenden, geringfügigen Leckagestrom zu kompensieren.

Zum Vermeiden einer übermäßigen Stickstoff- und Wasseranreicherung in der Brennstoffzelle wird ein kontinuierlicher oder periodischer Spülvorgang an der Anodenseite durchgeführt. Stickstoff und Wasser werden dabei in eine Abgasleitung der Brennstoffzelle geführt. Dabei kann jedoch ein gewisser Volumenstrom an Wasserstoff in die Abgasleitung gelangen.

Für Fehlerfälle, in denen ein größerer Volumenstrom entstehen kann, ist kurzfristig eine stärkere Belüftung notwendig. Es ist bekannt, diese durch einen zusätzlichen Lüfter bereitzustellen und die Brennstoffzelle in ihrem Betrieb zu unterbrechen. Weiterhin ist bekannt, einen der Brennstoffzelle zugeordneten, verdichteten Frischluftstrom, der für den Betrieb der Brennstoffzelle notwendig ist, dann ausschließlich oder teilweise zur Belüftung zu verwenden.

### Beschreibung

Es kann als Aufgabe betrachtet werden, ein alternatives Brennstoffzellensystem vorzuschlagen, bei dem eine übermäßige Wasserstoffkonzentration in einem Gehäuse oder einer Umgebung verhindert werden kann.

Diese Aufgabe wird gelöst durch den Gegenstand des unabhängigen Anspruchs 1. Weitere Ausführungsformen ergeben sich aus den abhängigen Ansprüchen sowie aus der folgenden Beschreibung.

Es wird ein Brennstoffzellensystem vorgeschlagen, aufweisend mindestens einen Brennstoffzellenstapel mit einer Kathodenseite und einer Anodenseite, ein den mindestens einen Brennstoffzellenstapel umgebendes Gehäuse, einen Gehäusespüllufteinlass, eine an dem Gehäusespüllufteinlass angeordnete Luftfördereinrichtung, einen Gehäusespülluftauslass, einen Oxidationskatalysator, mindestens einen Temperatursensor, und eine Steuereinheit, wobei die Luftfördereinrichtung dazu ausgebildet ist, kontinuierlich einen Luftstrom in den Gehäusespüllufteinlass zu leiten, wobei der Oxidationskatalysator stromabwärts des Gehäusespülluftauslasses angeordnet ist und dazu ausgebildet ist, Wasserstoff und Sauerstoff katalytisch zu verbrennen, wobei der mindestens eine Temperatursensor an dem Oxidationskatalysator angeordnet ist und dazu ausgebildet ist, die Temperatur des Oxidationskatalysators als Information über einen außerhalb eines Brennstoffzellenprozesses anfallenden und abzuführenden Wasserstoffvolumenstrom zu erfassen, und wobei die Steuereinheit mit dem mindestens einen Temperatursensor und der Luftfördereinrichtung gekoppelt ist und dazu ausgebildet ist, eine von dem mindestens einen Temperatursensor erfasste Temperatur aufzunehmen und daraus Veränderungen einer Wasserstoffkonzentration zu bestimmen.

Der mindestens eine Brennstoffzellenstapel könnte eine Vielzahl von einzelnen Polymer-Elektrolyt-Membran-Brennstoffzellen (PEMFC) aufweisen, bei denen die Membran hierbei eine Anode von einer Kathode trennt. Die Brennstoffzellen sind elektrisch je nach Anforderung insgesamt oder gruppenweise in Reihe und/oder parallelgeschaltet. PEM-Brennstoffzellen sind technisch ausgereift und können zuverlässig auf niedrigeren und höheren Temperaturniveaus betrieben werden. Durch niedrigere Temperaturniveaus sind diese Brennstoffzellen insbesondere für einen dauerhaften Einsatz auch in Fahrzeugen zum Transport von Passagieren bedenkenlos verwendbar.

Zum Betrieb der Brennstoffzelle ist ein kontinuierlicher Zufluss von Edukten notwendig. An der Kathodenseite wird während des normalen Betriebs Frischluft als Oxidant für den Brennstoffzellenprozess zugeführt. Hierzu kann ein Verdichter vorgesehen sein, dem gegebenenfalls ein Zwischenkühler nachgeschaltet ist. An der Anodenseite wird indes Wasserstoff bereitgestellt, der aus einer externen Wasserstoffquelle stammt.

Das Gehäuse umschließt den mindestens einen Brennstoffzellenstapel und führt notwendige Leitungen von außerhalb des Gehäuses durch eine Gehäusewand zu dem mindestens einen Brennstoffzellenstapel. Dies kann eine Wasserstoffleitung, eine Luftleitung, eine Abluftleitung, einen Vorlauf und einen Rücklauf einer Kühlvorrichtung, mindestens eine Stromleitung und gegebenenfalls eine Steuerleitung umfassen. Innerhalb des Gehäuses können neben dem mindestens einen Brennstoffzellenstapel weitere Komponenten vorgesehen sein, wie etwa verschiedene Ventile, ein Wasserabscheider oder ähnliches.

Der Gehäusespülluftauslass könnte an einem oberen Ende des Gehäuses angeordnet sein. Der Begriff "oben" ist dabei derart zu verstehen, dass sich der betreffende Bereich des Gehäuses beim normalen Betrieb des übergeordneten Systems, in das das Brennstoffzellensystem integriert ist, oberhalb anderer Bereiche des Gehäuses befindet. Da Wasserstoff leichter als Luft ist, könnte er ohne weiteres durch diesen Gehäusespülluftauslass austreten, ohne zwangsläufig eine aktive Spülung zu erfordern. Insbesondere in einem Ruhezustand, bei dem die Luftfördereinrichtung außer Betrieb ist, kann Restwasserstoff in den Gehäusespülluftauslass gelangen.

Der Gehäusespüllufteinlass könnte an einem unteren Ende des Gehäuses und bevorzugt in einem Bereich angeordnet sein, der dem Gehäusespülluftauslass gegenüberliegt. Der Gehäusespüllufteinlass ist dafür vorgesehen, über die Luftfördereinrichtung aktiv Luft in das Gehäuse einzuleiten, um das Innere des Gehäuses zu spülen, sodass eine Wasserstoffkonzentration im Innern des Gehäuses verringert wird. Beim Spülen entsteht in dem Inneren des Gehäuses ein Überdruck, der zum Ausströmen von Gas aus dem Gehäusespülluftauslass führt. Damit wird in dem Innern des Gehäuses enthaltener Wasserstoff herausgespült bzw. verdünnt.

Der Oxidationskatalysator kann auch als katalytischer Rekombinator bezeichnet werden und fungiert als passive Sicherheitsvorrichtung. Darin wird Wasserstoff unter Wirkung eines katalytisch aktiven Materials mit Sauerstoff zu Wasser umgesetzt. Dies könnte bei der Umgebungstemperatur erfolgen. Es könnte auch sinnvoll sein, den Oxidationskatalysator in manchen Betriebspunkten zu beheizen, insbesondere, wenn Luft und Wasserstoff nicht bei Temperaturen anfallen, bei denen die Reaktionsgeschwindigkeit für eine vollständige Oxidation ausreicht. Dies ließe sich etwa mithilfe einer elektrischen Beheizung darstellen, die auch direkt in den Oxidationskatalysator integriert sein kann. Aus dem Gehäusespülluftauslass strömender Wasserstoff wird folglich direkt umgesetzt und kann nicht entzündet werden. Bei diesem Prozess entsteht im Oxidationskatalysator Wärme.

Der mindestens eine Temperatursensor kann die durch der Wärme entstehende Temperaturerhöhung messen. Eine gemessene Temperaturerhöhung ist dabei direkt von dem Wasserstoffvolumenstrom abhängig. Je höher die an dem Oxidationskatalysator entstehende Wärmemenge ist, desto höher ist auch der Wasserstoffvolumenstrom, der in dem Oxidationskatalysator umgesetzt wird. Folglich kann durch Messen der Temperatur des Oxidationskatalysators mittelbar bestimmt werden, wie hoch der Wasserstoffstrom ist, der durch Spülung in den Gehäusespülluftauslass strömt. Die Erfassung der Temperatur ist dabei deutlich rascher als die Detektion von Wasserstoff mittels eines Wasserstoffsensors an dem Gehäusespülluftauslass. Die Steuereinheit kann ermitteln, ob sich eine Wasserstoffkonzentration im Innern des Gehäuses ändert, indem Änderungen an der erfassten Temperatur detektiert werden. Das erfindungsgemäße Brennstoffzellensystem ermöglicht folglich, bei einem Spülvorgang entstehenden Wasserstoff unmittelbar zu eliminieren und gleichzeitig durch eine sehr einfache Technik zu erfassen, wie hoch der Wasserstoffvolumenstrom tatsächlich ist, sodass eine Wartung des Brennstoffzellensystems oder eine Einschränkung seines Betriebs initiiert werden kann.

Der mindestens eine Temperatursensor könnte in einem Auslassrohr angeordnet sein, das direkt auf den Oxidationskatalysator folgt. Das Auslassrohr könnte beispielsweise einen dedizierten Wasserstoffkamin darstellen, bei dem bereits aufgrund der geringeren Dichte Wasserstoff automatisch ausströmt. Das Auslassrohr ist daher bevorzugt an einem oberen Ende des Gehäuses angeordnet. Der Oxidationskatalysator kann in dem Auslassrohr, davor oder zwischen zwei aufeinanderfolgenden Auslassrohren angeordnet sein. Der mindestens eine Temperatursensor ist dabei derart angeordnet, dass ein ungehindertes Ausströmen des Gases aus dem Auslassrohr ermöglicht wird.

Das Brennstoffzellensystem könnte ferner eine Flammendurchschlagsicherung aufweisen, die stromaufwärts des Oxidationskatalysators angeordnet ist und dazu ausgebildet ist, eine Entzündung von Wasserstoff stromaufwärts der Flammendurchschlagsicherung zu verhindern. Die Flammendurchschlagsicherung kann eine Deflagrationssicherung sein und auf unterschiedliche Weise realisiert werden. Es könnte sinnvoll sein, bei vorgeschalteten, geraden Rohrleitungen ein Verhältnis von Durchmesser zur Länge zu begrenzen, um die Wirkung der Flammendurchschlagsicherung zu unterstützen.

Das Brennstoffzellensystem könnte ferner eine mit der Steuereinheit gekoppelte Anodenspülvorrichtung zum Spülen der Anodenseite des mindestens einen Brennstoffzellenstapels aufweisen, wobei die Anodenspülvorrichtung mindestens ein Spülventil aufweist, das zwischen einem Anodenauslass und dem Oxidationskatalysator angeordnet ist, und wobei die Steuereinheit dazu ausgebildet ist, durch selektives Öffnen des mindestens einen Spülventils einen Wasserstoffstrom durch die Anodenseite zu dem Oxidationskatalysator zum Spülen der Anodenseite zu leiten. Das Spülventil könnte zwischen einem offenen und einem geschlossenen Zustand geschaltet werden. Durch Öffnen des Spülventils wird eine Fluidverbindung zwischen einer Wasserstoffzufuhr an der Anodenseite und dem Anodenauslass über die Anodenseite hergestellt. Durch kontinuierliches Einströmen von Wasserstoff in die Anodenseite wird in der Anodenseite befindliches Fluid herausbefördert. Damit können angesammeltes Wasser und Stickstoff an der Anodenseite entfernt werden. Dabei kann jedoch nicht verhindert werden, dass auch ein bestimmtes Wasserstoffvolumen aus der Anodenseite ausströmt, das dem Brennstoffzellenprozess nicht zur Verfügung steht. Durch das Einleiten des Spülgases in den Gehäusespülluftauslass kann durch den Oxidationskatalysator der Wasserstoff unmittelbar unschädlich gemacht werden. Die Steuereinheit kann beispielsweise in bestimmten zeitlichen Abständen ein zugeordnetes Spülventil öffnen. Damit wird ein Durchströmen der jeweiligen Anode ermöglicht.

Der mindestens eine Brennstoffzellenstapel könnte mehrere Brennstoffzellenstapel umfassen, wobei das mindestens eine Spülventil mehrere Spülventile umfasst, die mit unterschiedlichen Brennstoffzellenstapeln gekoppelt sind, und wobei die Steuereinheit dazu ausgebildet ist, die mehreren Spülventile nacheinander und/oder nicht gleichzeitig zu öffnen. Beispielsweise könnte jedem Brennstoffzellenstapel ein individuelles Spülventil zugeordnet sein. Es könnten jedoch auch Gruppen von Brennstoffzellenstapeln vorgesehen sein, die mit einem gemeinsamen Spülventil ausgestattet sind. Ein Brennstoffzellenstapel könnte auch zwei oder mehr Spülventile aufweisen, um beispielsweise den Spülvolumenstrom zu beeinflussen. Es ist besonders bevorzugt, die mehreren Spülventile nicht gleichzeitig zu öffnen. Beispielsweise könnte eine zeitliche Sequenz vorgesehen sein, in der sämtliche Spülventile in einer bestimmten Reihenfolge geöffnet und wieder geschlossen werden. Die einzelnen Brennstoffzellenstapel könnten damit etwa nacheinander gespült werden. Hierdurch entsteht ein kontinuierlicher, zusätzlicher Wasserstoffeintrag an dem Oxidationskatalysator, durch den die Temperatur an dem Oxidationskatalysator um einen bestimmten Betrag steigen kann. Bei einem kontinuierlichen Spülen der Brennstoffzellenstapel nacheinander oder in einer bestimmten Sequenz, sodass beispielsweise kein Zeitpunkt vorliegt, in dem sämtliche Spülventile geschlossen sind, ist ein kontinuierlicher, zusätzlicher Wärmeeintrag in den Oxidationskatalysator die Folge. Besonders bevorzugt ist der zusätzliche Wasserstoffeintrag gleichmäßig, sodass ein kontinuierlicher, annähernd gleichbleibender Wasserstoffeintrag erfolgt. Folglich könnten Wasserstoffkonzentrationsänderungen im Innern des Gehäuses auch beim Einleiten von Spülgasen in den Oxidationskatalysator sehr einfach ermittelt werden.

Die Steuereinheit könnte dazu ausgebildet sein, aus einer gemessenen Temperatur des mindestens einen Temperatursensors eine momentane Wasserstoffkonzentration eines in den Oxidationskatalysator strömenden Gasgemisches zu ermitteln. Neben der Untersuchung von Konzentrationsänderungen könnte durch einen entsprechenden Algorithmus ein tatsächlicher, momentaner Gehalt an Wasserstoff ermittelt werden. Hierbei könnten weitere Größen Verwendung finden, beispielsweise ein Gesamtvolumenstrom an durch den Oxidationskatalysator strömendem Gas sowie eine Gastemperatur stromaufwärts des Oxidationskatalysators. Es ist denkbar, dass weitere Größen notwendig oder sinnvoll sein können, um eine genaue Berechnung durchzuführen.

Die Steuereinheit könnte dazu ausgebildet sein, den Betrieb der Luftfördereinrichtung abhängig von der ermittelten Wasserstoffkonzentration zu beeinflussen. So könnte die aktive Durchspülung des Gehäuses intensiviert werden, wenn sich die Wasserstoffkonzentration erhöht. Ist indes kein Wasserstoff oder nur ein sehr geringer Anteil an Wasserstoff im Innern des Gehäuses ermittelbar, könnte die Luftförderleistung in ihrer Leistung auch reduziert werden oder es könnte gänzlich auf eine passive Durchspülung gewechselt werden. Dabei könnte sinnvoll sein, den Gehäusespülluftauslass derart anzuordnen, dass durch ausströmende Spülgase oder durch ein Vorhandensein von Wasserstoff in dem Gehäuse selbst ein schwerkraftbedingtes Austreten erfolgt, wobei unter einem dann eintretenden Unterdruck durch den Gehäusespüllufteinlass Umgebungsluft angesaugt wird.

Die Steuereinheit könnte dazu ausgebildet sein, zumindest temporär das mindestens eine Spülventil zu schließen und bei geschlossenem mindestens einen Spülventil die momentane Wasserstoffkonzentration im Innern des Gehäuses zu ermitteln. Durch das Schließen des mindestens einen Spülventils kann isoliert eine Wasserstoffkonzentration im Innern des Gehäuses ermittelt werden. Eine entsprechende Ansteuerung der Luftförderleistung könnte dann von der in diesem Zeitraum erfassten Wasserstoffkonzentration abhängig gemacht werden.

Die Steuereinheit könnte dazu ausgebildet sein, die momentane Wasserstoffkonzentration im Innern des Gehäuses mit einem tolerierbaren Wert zu vergleichen und bei Überschreiten des tolerierbaren Werts einen von der Luftfördereinrichtung bereitgestellten Luftvolumenstrom zu erhöhen. Die Luftförderleistung könnte beispielsweise insbesondere konstant betrieben werden. Erst bei Überschreiten eines entsprechenden, tolerierbaren Werts könnte die Leistung an der Luftförderleistung erhöht werden.

Die Steuereinheit könnte dazu ausgebildet sein, das Brennstoffzellensystem mit einer reduzierten Leistung zu betreiben, wenn die momentane Wasserstoffkonzentration im Innern des Gehäuses einen vorgebbaren Schwellenwert überschreitet. Überschreitet die Wasserstoffkonzentration folglich einen Schwellenwert, der deutlich über dem oben genannten tolerierbaren Wert liegen könnte, könnte dies als Indiz für eine technische Störung gewertet werden. Dann ist es sinnvoll, die Leistung des Brennstoffzellensystems zu reduzieren, sodass die Wasserstoffzufuhr ebenso reduziert wird. Die Steuereinheit könnte dann beispielsweise einen Wartungshinweis generieren und nach außen kommunizieren oder in einem elektronische Bordbuch ablegen.

Die Erfindung betrifft ferner ein Fahrzeug, aufweisend mindestens ein Brennstoffzellensystem nach der vorangehenden Beschreibung.

Das Fahrzeug könnte ein Flugzeug sein. Das Brennstoffzellensystem könnte zur Bereitstellung elektrischer Leistung Triebwerksgeneratoren ergänzen oder ersetzen.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1-5: schematische Darstellungen eines Brennstoffzellensystems in mehreren Varianten.
- Fig. 6: ein Flugzeug mit einem darin angeordneten Brennstoffzellensystem.

### Detaillierte Beschreibung von Ausführungsbeispielen

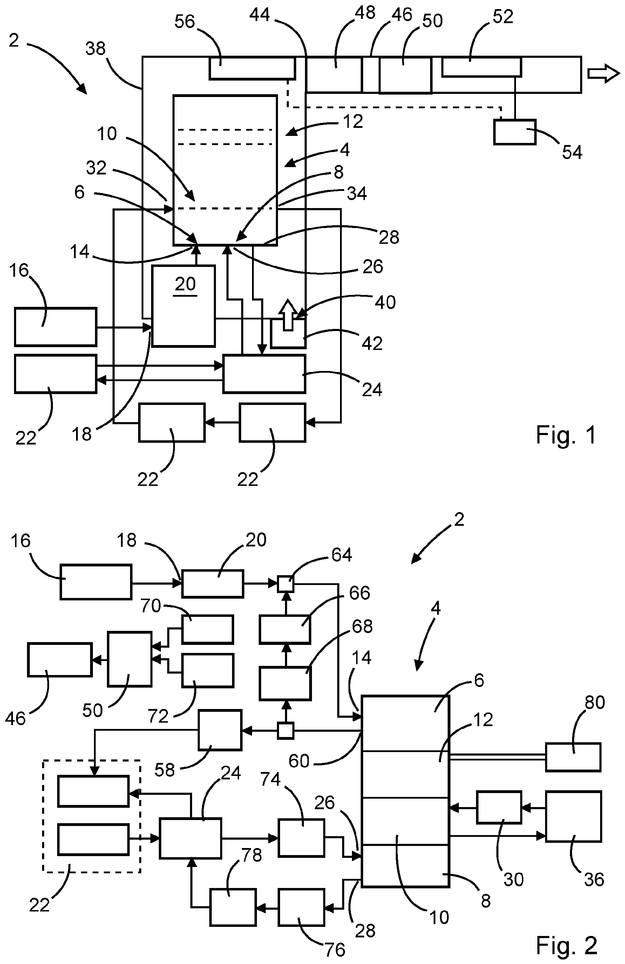

Fig. 1 zeigt ein Brennstoffzellensystem 2 mit einem Brennstoffzellenstapel 4, der eine Anodenseite 6, eine Kathodenseite 8, einen Wärmeübertrager 10 sowie ein elektrisches Anschlussterminal 12 umfasst. Es ist hierbei angemerkt, dass der Brennstoffzellenstapel 4 hier lediglich schematisch dargestellt ist und tatsächlich aus einer Reihe von Brennstoffzellen besteht, welche mittels Bipolarplatten elektrisch miteinander verbunden und mit Edukten versorgt werden.

Die Anodenseite 6 wird an einem Anodeneinlass 14 mit Wasserstoff versorgt, der aus einer Wasserstoffquelle 16 stammt, welche über einen Wasserstoffanschluss 18 mit dem Brennstoffzellensystem 2 verbunden ist. An den Wasserstoffanschluss 18 schließen sich ein oder mehrere Wasserstoffventile 20 an, die dazu ausgebildet sind, durch Ansteuerung dosiert frischen Wasserstoff an den Anodeneinlass 14 zu liefern. Diese Anordnung wird, gegebenenfalls mit weiteren Komponenten, als "Balance of Plant" bezeichnet.

Der Kathodenseite 8 wird Luft aus einer Luftquelle 22 zugeführt, die durch einen Befeuchter 24 befeuchtet wird, um die Integrität einer in dem Brennstoffzellenstapel 4 befindlichen Membran zu gewährleisten. Die vorbefeuchtete Luft gerät in einen Kathodeneinlass 26. Nach Verbrauch eines Anteils Sauerstoff gelangt Abluft aus einem Kathodenauslass 28 in den Befeuchter 24 und gibt dort Wasserdampf an die frische Zuluft ab.

Der Wärmeübertrager 10 könnte beispielsweise in die vorangehend genannten Bipolarplatten integriert sein und wird mittels einer Pumpe 30 von einem Kühlmittel durchströmt. Dazu fließt das Kühlmittel in einen Kühlmitteleinlass 32, wird in dem Brennstoffzellenstapel 4 erwärmt und fließt aus einem Kühlmittelauslass 34 wieder aus. Über einen Wärmetauscher 36 kann die von dem Kühlmittel aufgenommene Wärme wieder in die Umgebung abgegeben werden.

Das Brennstoffzellensystem 2 weist ferner ein Gehäuse 38 auf, das hier beispielhaft den Brennstoffzellenstapel 4 und die Wasserstoffventile 20 umschließt. Das Gehäuse 38 könnte bevorzugt so kompakt wie möglich gestaltet sein und einen nicht unnötig großen freien Innenraum bereitstellen. Das Gehäuse 38 weist einen an seiner Unterseite einen Gehäusespüllufteinlass 40 auf, an dem eine Luftfördereinrichtung 42 vorgesehen ist, welche aktiv Umgebungsluft in das Gehäuse 38 einleitet. Diese führt zum Herausspülen des darin befindlichen Gases aus einem Gehäusespülluftauslass 44, der beispielhaft an seiner oberen Seite angeordnet ist. Dieser könnte in einem entsprechenden Auslassrohr 46 münden.

In dem Auslassrohr 46 ist eine Flammendurchschlagsicherung 48 angeordnet, an die sich ein Oxidationskatalysator 50 anschließt. Direkt stromabwärts ist ein Temperatursensor 52 angeordnet. Wasserstoff, der durch den Gehäusespülluftauslass 44 strömt, wird durch den Oxidationskatalysator 50 unter Erzeugung von Wärme mit Sauerstoff zu Wasser umgesetzt. Der Temperatursensor 52 erfasst dabei die Temperatur des Abgases stromabwärts des Oxidationskatalysators 50, sodass eine mit dem Temperatursensor 52 gekoppelte Steuereinheit 54 anhand der erfassten Temperatur eine Änderung einer Wasserstoffkonzentration oder eine Höhe der Wasserstoffkonzentration ermitteln kann. Zusätzlich kann auch innerhalb des Gehäuses 38 noch ein Wasserstoffsensor 56 angeordnet sein, der ebenso mit der Steuereinheit 54 gekoppelt ist.

Fig. 2 zeigt eine etwas modifizierte Ansicht in einer schematischen Blockdarstellung, in der noch weitere Details ersichtlich sind. Ein Spülventil 58, das mit einem Anodenauslass 60 gekoppelt ist, kann zum bedarfsweisen Spülen der Anodenseite 6 genutzt werden, insbesondere um Stickstoff und Wasser aus den Brennstoffzellen zu entfernen. Das Spülventil 58, das mit der Steuereinheit 54 verbunden sein kann, ist hierfür mit einem Auslass 62 verbunden, der das Spülgas der Umgebung zuführt.

Bei geschlossenem Spülventil 58 gelangt Wasserstoffrestgas aus dem Anodenauslass 60 in einen Mischpunkt 64, wo ihm frischer Wasserstoff zugeführt wird und zu dem Anodeneinlass 14 strömt. Der Mischpunkt 64 könnte auch als eine Strahlpumpe ausgeführt sein. Zum Fördern des Wasserstoffrestgases ist ein Rezirkulationsgebläse 66 mit dem Anodenauslass 60 gekoppelt, sodass insgesamt ein Rezirkulationskreis gebildet wird. Dabei ist zusätzlich ein Wasserabscheider 68 vorgesehen, der dem Mischpunkt 64 vorgeschaltet ist und das Anodenabgas zumindest teilweise entfeuchtet bzw. Kondensat aus einer Zuleitung abscheidet.

Leckagewasserstoff 70, der sich im Innern des Gehäuses 38 sammelt, wird mit frischer Zuluft 72, die durch die Luftfördereinrichtung 42 in das Gehäuse 38 gerät, in dem Oxidationskatalysator 50 zu Wasser vereinigt. Luft mit darin enthaltenem Wasserdampf wird folglich durch das Auslassrohr 46 nach außen geleitet.

Weiterhin ist beispielhaft dem Befeuchter 24 ein erstes Abschaltventil 74 nachgeschaltet. Ein zweites Abschaltventil 76 ist dem Kathodenausgang 28 nachgeschaltet. Zum Abschalten des Brennstoffzellensystems 2 können die beiden Abschaltventile 74 und 76 zusätzlich zu den Wasserstoffventilen 20 geschlossen werden. Dem zweiten Abschaltventil 76 ist ein Wasserabscheider 78 nachgeschaltet, der aus Kathodenabluft Wasser abscheidet und beispielhaft dem Befeuchter 24 zuführt.

Eine elektrische Last 80 ist mit dem elektrische Anschlussterminal 12 verbunden und wird von diesem mit elektrischer Leistung versorgt.

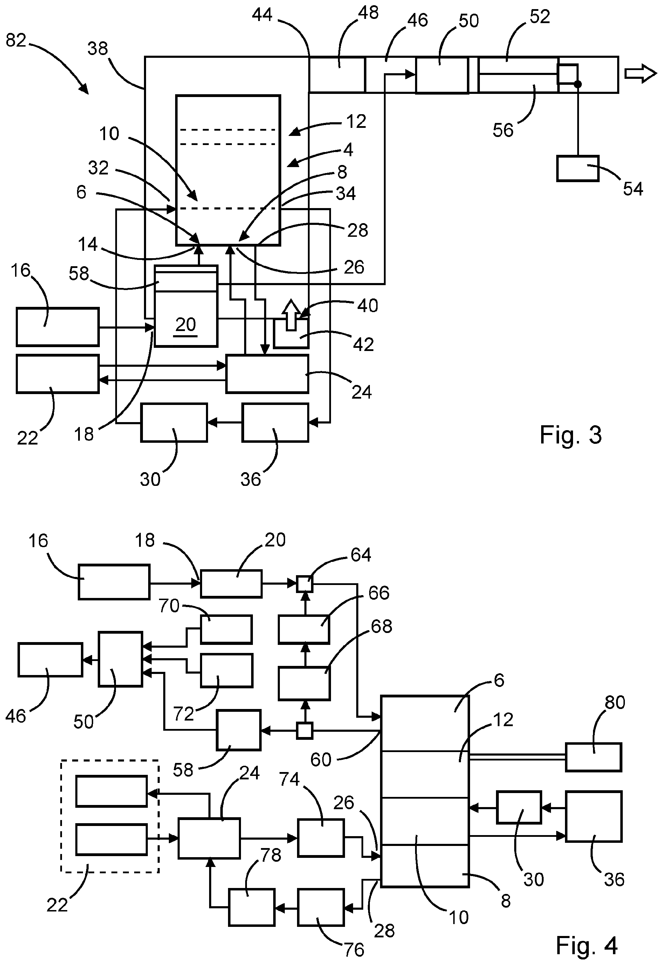

In Fig. 3 und 4 wird ein etwas modifiziertes Brennstoffzellensystem 82 gezeigt. Hier steht das Spülventil 58 mit dem Oxidationskatalysator 50 in Fluidverbindung. Dies bedeutet, dass Spülgase aus dem Brennstoffzellenstapel 4 direkt in das Auslassrohr 46 geführt und durch den Oxidationskatalysator 50 unschädlich gemacht werden. Die Temperatur des in die Umgebung ausströmenden Gases kann sich dadurch etwas weiter erhöhen. Beispielhaft ist der Wasserstoffsensor 56 stromabwärts des Oxidationskatalysators 50 angeordnet.

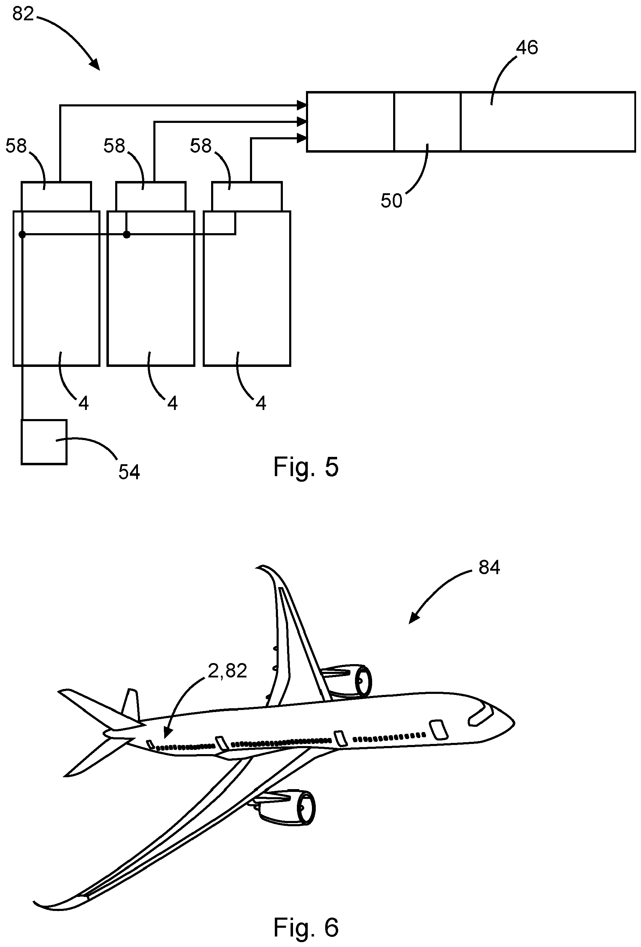

Fig. 5 zeigt eine lediglich schematisch dargestellte Kombination mehrerer Brennstoffzellenstapel 4 in dem Brennstoffzellensystem 82, wobei jeder Brennstoffzellenstapel 4 beispielhaft mit einem Spülventil 58 ausgestattet ist. Die einzelnen Spülventile 58 stehen mit dem Oxidationskatalysator 50 in Fluidverbindung, sodass in den Spülgasen enthaltener Wasserstoff mit Luft direkt zu Wasser umgesetzt wird. Die Steuereinheit 54 kann die Spülventile sequentiell ansteuern, sodass die Spülventile 58 in einer bestimmten Reihenfolge öffnen und schließen und insbesondere nacheinander und besonders bevorzugt nicht gleichzeitig öffnen. Damit kann ein annähernd gleichbleibender, zusätzlicher Wasserstoffeintrag in den Oxidationskatalysator erfolgen, der zu einer annähernd gleichbleibenden zusätzlichen Erwärmung führt.

Schließlich zeigt Fig. 5 ein Flugzeug 84, in das ein Brennstoffzellensystem 2 oder 82 installiert ist.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 2: Brennstoffzellensystem
- 4: Brennstoffzellenstapel
- 6: Anodenseite
- 8: Kathodenseite
- 10: Wärmeübertrager
- 12: Anschlussterminal
- 14: Anodeneinlass
- 16: Wasserstoffquelle
- 18: Wasserstoffanschluss
- 20: Wasserstoffventil
- 22: Luftquelle
- 24: Befeuchter
- 26: Kathodeneinlass
- 28: Kathodenauslass
- 30: Pumpe
- 32: Kühlmitteleinlass
- 34: Kühlmittelauslass
- 36: Wärmetauscher
- 38: Gehäuse
- 40: Gehäusespüllufteinlass
- 42: Luftfördereinrichtung
- 44: Gehäusespülluftauslass
- 46: Auslassrohr
- 48: Flammendurchschlagsicherung
- 50: Oxidationskatalysator
- 52: Temperatursensor
- 54: Steuereinheit
- 56: Wasserstoffsensor
- 58: Spülventil
- 60: Anodenauslass
- 62: Auslass
- 64: Mischpunkt
- 66: Rezirkulationsgebläse
- 68: Wasserabscheider
- 70: Leckagewasserstoff
- 72: Zuluft
- 74: erstes Abschaltventil
- 76: zweites Abschaltventil
- 78: Wasserabscheider
- 80: elektrische Last
- 82: Brennstoffzellensystem
- 84: Flugzeug

## Patentansprüche

1. Brennstoffzellensystem (2, 82), aufweisend
- mindestens einen Brennstoffzellenstapel (4) mit einer Kathodenseite (8) und einer Anodenseite (6),
- ein den mindestens einen Brennstoffzellenstapel (4) umgebendes Gehäuse (38),
- einen Gehäusespüllufteinlass (40),
- eine an dem Gehäusespüllufteinlass (40) angeordnete Luftfördereinrichtung (42),
- einen Gehäusespülluftauslass (44),
- einen Oxidationskatalysator (50),
- mindestens einen Temperatursensor (52), und
- eine Steuereinheit (54),
wobei die Luftfördereinrichtung (42) dazu ausgebildet ist, kontinuierlich einen Luftstrom in den Gehäusespüllufteinlass (40) zu leiten,
wobei der Oxidationskatalysator (50) stromabwärts des Gehäusespülluftauslasses (44) angeordnet ist und dazu ausgebildet ist, Wasserstoff und Sauerstoff katalytisch zu verbrennen,
wobei der mindestens eine Temperatursensor (52) an dem Oxidationskatalysator (50) angeordnet ist und dazu ausgebildet ist, die Temperatur des Oxidationskatalysators (50) als Information über einen außerhalb eines Brennstoffzellenprozesses anfallenden und abzuführenden Wasserstoffvolumenstrom zu erfassen, und
wobei die Steuereinheit (54) mit dem mindestens einen Temperatursensor (52) und der Luftfördereinrichtung (42) gekoppelt ist und dazu ausgebildet ist, eine von dem mindestens einen Temperatursensor (52) erfasste Temperatur aufzunehmen und daraus Veränderungen einer Wasserstoffkonzentration zu bestimmen.

2. Brennstoffzellensystem (2, 82) nach Anspruch 1,
wobei der mindestens eine Temperatursensor (52) in einem Auslassrohr (46) angeordnet ist, das direkt auf den Oxidationskatalysator (50) folgt.

3. Brennstoffzellensystem (2, 82) nach Anspruch 1 oder 2,
ferner aufweisend eine Flammendurchschlagsicherung (48), die stromaufwärts des Oxidationskatalysators (50) angeordnet ist und dazu ausgebildet ist, eine Entzündung von Wasserstoff stromaufwärts der Flammendurchschlagsicherung (48) zu verhindern.

4. Brennstoffzellensystem (2, 82) nach einem der vorhergehenden Ansprüche,
ferner aufweisend eine mit der Steuereinheit (54) gekoppelte Anodenspülvorrichtung zum Spülen der Anodenseite (6) des mindestens einen Brennstoffzellenstapels (4),
wobei die Anodenspülvorrichtung mindestens ein Spülventil (58) aufweist, das zwischen einem Anodenauslass (60) und dem Oxidationskatalysator (50) angeordnet ist, und
wobei die Steuereinheit (54) dazu ausgebildet ist, durch selektives Öffnen des mindestens einen Spülventils (58) einen Wasserstoffstrom durch die Anodenseite (6) zu dem Oxidationskatalysator (50) zum Spülen der Anodenseite (6) zu leiten.

5. Brennstoffzellensystem (2, 82) nach Anspruch 4,
wobei der mindestens eine Brennstoffzellenstapel (4) mehrere Brennstoffzellenstapel (4) umfasst,
wobei das mindestens eine Spülventil (58) mehrere Spülventile (58) umfasst, die mit unterschiedlichen Brennstoffzellenstapeln (4) gekoppelt sind, und
wobei die Steuereinheit (54) dazu ausgebildet ist, die mehreren Spülventile (58) nacheinander und/oder nicht gleichzeitig zu öffnen.

6. Brennstoffzellensystem (2, 82) nach einem der vorhergehenden Ansprüche,
wobei die Steuereinheit (54) dazu ausgebildet ist, aus einer gemessenen Temperatur des mindestens einen Temperatursensors (52) eine momentane Wasserstoffkonzentration eines in den Oxidationskatalysator (50) strömenden Gasgemisches zu ermitteln.

7. Brennstoffzellensystem (2, 82) nach einem der vorhergehenden Ansprüche,
wobei die Steuereinheit (54) dazu ausgebildet ist, den Betrieb der Luftfördereinrichtung (42) abhängig von der ermittelten Wasserstoffkonzentration zu beeinflussen.

8. Brennstoffzellensystem (2, 82) nach Anspruch 4 und 7,
wobei die Steuereinheit (54) dazu ausgebildet ist, zumindest temporär das mindestens eine Spülventil (58) zu schließen und bei geschlossenem mindestens einen Spülventil (58) die momentane Wasserstoffkonzentration im Innern des Gehäuses (38) zu ermitteln.

9. Brennstoffzellensystem (2, 82) nach Anspruch 8,
wobei die Steuereinheit (54) dazu ausgebildet ist, die momentane Wasserstoffkonzentration im Innern des Gehäuses (38) mit einem tolerierbaren Wert zu vergleichen und bei Überschreiten des tolerierbaren Werts einen von der Luftfördereinrichtung (42) bereitgestellten Luftvolumenstrom zu erhöhen.

10. Brennstoffzellensystem (2, 82) nach Anspruch 8 oder 9,
wobei die Steuereinheit (54) dazu ausgebildet ist, das Brennstoffzellensystem (2, 82) mit einer reduzierten Leistung zu betreiben, wenn die momentane Wasserstoffkonzentration im Innern des Gehäuses (38) einen vorgebbaren Schwellenwert überschreitet.

11. Fahrzeug (84), aufweisend mindestens ein Brennstoffzellensystem (2, 82) nach einem der vorhergehenden Ansprüche.

12. Fahrzeug (84) nach Anspruch 11, wobei das Fahrzeug (84) ein Flugzeug (84) ist.
